Europäisches Patentamt

European Patent Office

Office européen des brevets

(19)

(11) Publication number: 0 470 664 A1

# EUROPEAN PATENT APPLICATION

(12)

(21) Application number: 91201977.5

(22) Date of filing: 30.07.91

(51) Int. Cl.5: G06F 3/06, G06F 12/08

(30) Priority: 31.07.90 NL 9001728

(43) Date of publication of application:
12.02.92 Bulletin 92/07

(84) Designated Contracting States:
BE DE DK ES FR GB IT NL SE

(71) Applicant: TULIP COMPUTERS
INTERNATIONAL B.V.
Hambakenwetering 4
NL-5231 DC 's-Hertogenbosch(NL)

(72) Inventor: van Rumpt, Herman Wouter
Neercanne 15
NL-5235 HC 's-Hertogenbosch(NL)
Inventor: Kwan, Benny Ching Tak
Dr. Hermansweg 192
NL-5624 HX Eindhoven(NL)
Inventor: Vervoorn, Willem Jan
Graaf Reinaldweg 4
NL-4174 LE Hellouw(NL)
Inventor: Stawinski, Marek
Duinkerkenlaan 115
NL-5627 MC Eindhoven(NL)

(74) Representative: Smulders, Theodorus A.H.J.,
Ir. et al
Vereenigde Octrooibureaux, Nieuwe
Parklaan 97
NL-2587 BN Den Haag(NL)

(54) Device for improving the efficiency of data transfer to and from a memory unit comprising at least one hard disk.

(57) A device for improving in completely transparent manner the efficiency of data transfer between a memory unit and a central processing unit, which memory unit comprises a cache memory and at least one hard disk. To that effect, there are provided at least two memory units (12,13), each having a corresponding cache memory and at least one hard disk, and in the connecting path between the central processing unit and the memory units, there are provided a first switching unit (16) for combining data blocks or splitting them, a second switching unit (15) for combining the interrupt signals generated by the two memory units, and an address decoding unit (17) for converting the addresses generated by the central processing unit to addresses for the two memory units.

FIG. 2a

to/from 12
130 µsec  220 µsec

to/from 13
130 µsec  220 µsec

The invention relates to a device for improving, in a computer system comprising at least one central processing unit and a memory unit, the efficiency of data transfer between the memory unit and the central processing unit, the memory unit comprising an intermediate memory (cache memory) and at least one hard disk, and the data transfer between the central processing unit and the hard disk occurring via the cache memory.

If a computer system, for instance a personal computer, to be referred to hereinafter as a PC, of the AT (Advanced Technology) compatible type, comprises a single memory unit with a control unit suitable for the corresponding computer standard, the transfer of data which, under the control of this control unit, are to be stored on the hard disk of this unit or read from this hard disk, always occurs via an intermediate memory, the so-called cache memory, which forms the memory unit together with the control unit and the hard disk. The data transfer between the central processing unit and the cache memory occurs much faster than the data transfer between the cache memory and the hard disk. In the former case, the transfer rate is for instance 4 megabytes/sec. and in the latter case 1.5 megabytes/sec. It will be clear that the difference in transfer rate adversely affects the operational speed of the entire PC system and, accordingly, the object of the invention is to provide a solution to this problem, which can be realized simply, and hence economically, and does not necessitate the use of other software for controlling the computer system, so that the computer system remains compatible with the corresponding computer standard.

To that effect, the invention provides a device of the type described in the opening paragraph hereof, characterized in that there are provided at least two memory units, each having a corresponding cache memory and at least one hard disk, and that in the connecting path between the central processing unit and the memory units, there are provided switching and decoding means for transferring the data in blocks between the central processing unit on the one hand and, alternately, the first or the second memory unit on the other.

It is noted that it is known per se to utilize more than one memory unit in a PC, but one of them is invariably connected as master and the other memory unit(s) as slaves, so that the data transfer speed is still determined by the transfer speed between the central processing unit and the memory unit functioning as master.

Further, it is known from EP-A-0,156,742 to distribute the successive bits of the data to be transferred from the central processing unit to a plurality of successive memory units. The bit-by-bit distribution of the data, however, requires extensive control software and error correction means to enable smooth reading of the bitwise distributed information.

Further, for mainframe computers, it is known to use so-called disk arrays, consisting of a number of hard disk drives. Such a disk array is for instance described in "COMPAQ Peripherals Technical Reference Guide", section 1 Mass Storage, chapter 5 and in EP-A-0,369,707. When using disk arrays, however, there must be provided a buffer memory with a large storage capacity, in which buffer the data that are being transferred simultaneously from the different hard disk drives at a relatively low speed, are temporarily stored to be subsequently transferred to the central processing unit at a much higher speed. Moreover, a disk array requires special software for controlling the interrupt signals and the registers of the different hard disk drives. The invention, by contrast, does not require any additional storage capacity for the intermediate storage of data nor is any specific software required.

One embodiment of the invention will hereinafter be further explained and illustrated, by way of example only, with reference to the accompanying drawings, in which:

Fig. 1a is a block diagram of a known configuration of a central processing unit and a memory unit;

Fig. 1b is a schematic representation of the time lapse during data transfer between the central processing unit and the memory unit according to Fig. 1a;

Fig. 2a is a block diagram of a configuration of a central processing unit and two hard disk drives according to the principle of the invention; and

Fig. 2b is a schematic representation of the time lapse during data transfer between the central processing unit and the hard disk drives according to Fig. 2a.

Although it is emphasized that the invention can be used for writing data to, as well as reading data from, a hard disk, in the following, for convenience, reference will be made only to the reading of data, where it will be clear to anyone skilled in the art that the writing of data can in principle be carried out in the same manner.

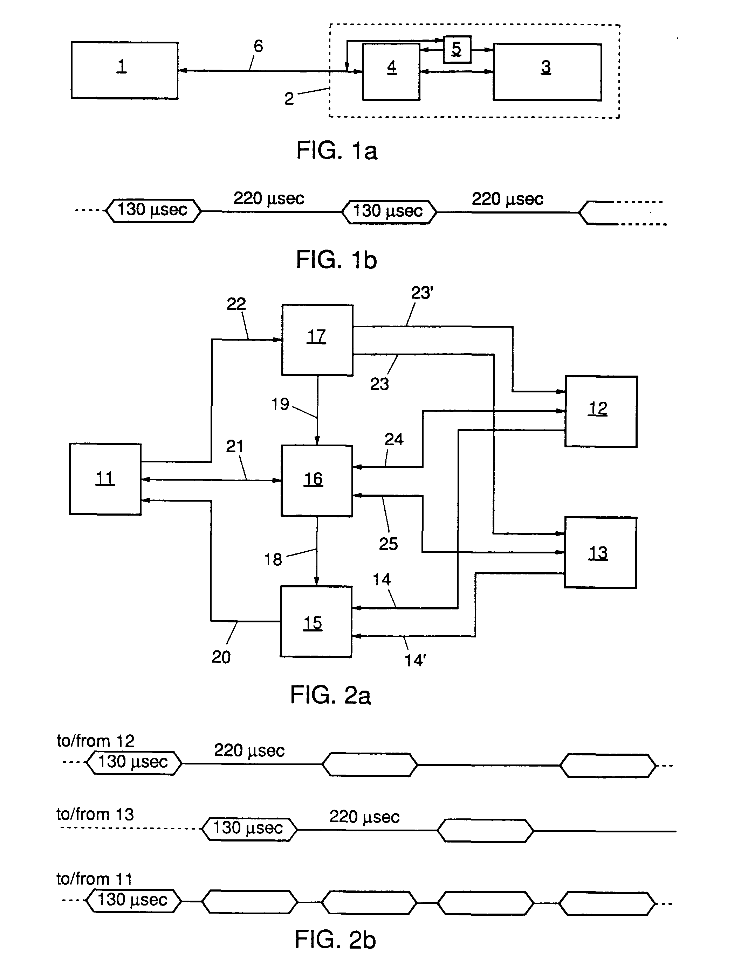

Fig. 1a schematically shows a conventional configuration of a central processing unit 1 and a memory unit 2 linked thereto via a bus 6, which memory unit 2 may or may not be accommodated within the same housing and comprises at least one hard disk 3, an intermediate or cache memory 4 and a control unit 5. All data transfer between the hard disk 3 and the central processing unit 1 occurs via the cache memory 4, which usually consists of a separate RAM intelligently controlled by the control unit 5.

In AT compatible memory units, for instance, but also in memory units adapted to other computer standards, data transfer to and from the hard disk 3 always occurs in blocks, for instance in blocks of a whole multiple of 512 bytes. Each time, one block of 512 bytes is transferred via the bus 6 between the cache memory 4 and the central processing unit 1 at a rate of 4 megabytes/sec. However, after transfer of a block of 512 bytes at this high rate, a certain period of time is required to enable writing of data from the cache memory to the hard disk or reading of a new block of data from this disk. In practice, such a period is 220 $\mu$sec., for instance. The above is schematically represented in Fig. 1b, showing that in the case of the above example of a data transfer rate of 4 megabytes/sec. and a waiting period of 220 $\mu$sec., in a period of 350 $\mu$sec. only 130 $\mu$sec is needed for the actual data transfer, i.e. more than half of the time available is lost by waiting for the data transfer to and from the hard disk 3.

Fig. 2a shows a block diagram of the device according to the invention, in which a central processing unit 11 of a PC, more particularly but not necessarily a PC of the AT type, cooperates with at least two memory units 12 and 13, each having the same setup as the memory unit 2 shown in Fig. 1a. The memory units are of the IDE (Intelligent Drive Electronics) type, which type of memory unit is particularly suitable to cooperate with a computer of the AT type. For further particulars about such IDE memory units, reference is for instance made to BYTE, March 1991, pp. 317-323.

The configuration shown in Fig. 2a is so designed that the two memory units 12 and 13 operate in parallel and so are not connected in a master-slave relationship. Accordingly, the central processing unit actually "sees" only one memory unit, which, however, has twice the capacity of a single memory unit. If, for instance, the hard disk of each of the memory units 12 and 13 has a storage capacity of 512 bytes per sector, 17 sectors per track, 1024 cylinders and 16 read/write heads, the central processing unit 11 in the configuration according to the invention "sees" for instance a memory unit with a capacity likewise of 512 bytes per sector, 1024 cylinders and 16 read/write heads, but with 34 sectors per track. Naturally, it is also possible to implement the invention in such a way that the central processing unit "sees" a memory unit with the same number of sectors, but with twice the number of heads or twice the number of cylinders of a single memory unit. However, for convenience, only the above-mentioned situation involving a double number of sectors will be described in the following. Although in the present description the term hard disk is used, it will be clear to anyone skilled in the art that such a hard disk may in practice consist of a plurality of hard disks, which, however, all cooperate with a single cache memory and are controlled from a single control unit.

To accomplish the principal object of the invention, that is, to increase the data transfer rate to and from the disks, the data blocks of 512 bytes, i.e. the data for one sector, are transferred from or to one of the two memory units 12 and 13 alternately, as schematically shown in Fig. 2b. The upper time line of this figure represents the data transfer from and to the memory unit 12, the middle line the data transfer from and to the memory unit 13 and the lower line the data transfer from and to the central processing unit 11. As appears from this figure, data are transferred to one of the memory units in the period of time which the other memory unit requires for writing the data from the cache memory to the disk or for reading the data from the disk to the cache memory. It will be clear that in this way the loss of data transfer speed due to the time required for writing or reading, is substantially reduced, because now of the 220 $\mu$sec. necessary in practice for this purpose, 130 $\mu$sec. are used for data transfer to the other memory unit.

For transferring the data in blocks to or from the two memory units 12 and 13 alternately, there are provided units 15, 16 and 17 which function in a manner to be described hereinafter and which by means of buses are linked to each other and the memory units 12 and 13 on the one hand and to the central processing unit 11 on the other.

The interrupt signals generated by the control units of the two memory units 12 and 13, which signals indicate whether the memory unit in question has a block of data ready for transfer or is ready to receive a new block of data, are supplied via a bus 14 and 14', respectively, to a unit 15, for instance a multiplexer, whose function is to combine these interrupt signals and to transfer them to the central processing unit 11 via a bus 20. There is also provided an address decoding unit 17, whose operation will be further explained hereinafter and whose function is to convert the addresses generated by the central processing unit and supplied via a bus 22, to addresses on buses 23' and 23 for the memory units 12 and 13, respectively. The address decoding unit 17 is linked for control signals to a datapath switching unit 16 via a bus 19. The unit 15, too, is linked for control signals to unit 16 via a bus 18. The control signals are generated in such a way that the units 15 and 16 switch simultaneously. This can for instance be effected by arranging for the unit 17 to pass the control signals to the unit 15 via the unit 16. The function of the datapath switching unit 16, which may likewise be a multiplexer, is, in the case of reading, to combine under the control of the control signals of the unit 17 the data coming from the memory units 12 and 13 via buses 24 and 25, respectively, into a single data stream and to supply them to the central processing unit via a bus 21. In the case of writing, the function of the datapath switching unit 16 is to transfer under the control of the control signals the data to be written as received via the bus 21, either to the memory unit 12 via a bus 24 or to the memory unit 13 via a bus 25.

The address decoding unit 17 may for instance function in the following manner. It is assumed that the central processing unit in the device according to Fig. 2a "sees" a memory unit having twice the number of sectors of a single memory unit such as 12 or 13, and that the sectors with an even number are on the hard disk of unit 12 and those with an odd number are on the hard disk of unit 13. Now the central processing unit 11 gives instructions via the bus 22, for instance, that 9 sectors of data be read, starting with sector 4 on cylinder 9 and with head 1. The address decoding unit 17 "translates" this information into addresses for the memory units 12 and 13: the memory unit 12 receives an address indicating that it is to read 5 sectors, starting with sector 4 (an even number) followed by sectors 6, 8, 10 and 12, all on cylinder 9 and with head 1, and memory unit 13 receives an address indicating that it is to read 4 sectors, starting with sector 5 (an odd sector number) followed by sectors 7, 9, and 11, all on cylinder 9 and with head 1. The "translation" of the addresses received via the bus 22 can for instance be effected by means of registers present in the address decoding unit 17, which registers contain the corresponding address, either for memory 12 or for memory 13, for any address received. Under the control of a control signal generated by the address decoding unit 16, the multiplexers in the units 15 and 16 are now set in such a way that they are connected to the memory unit 12, because that is where the first sector of data will come from. After the data have been transferred from sector 4 of the memory unit 12 via the buses 24 and 21 to the central processing unit 11, in response to the interrupt signal generated by memory unit 12, indicating that the data transfer from the first sector has been completed, the multiplexers in the units 15 and 16 are set in such a way that they are connected to the memory unit 13 in order to transfer the data of sector 5, held in readiness in the cache memory of unit 13, to the central processing unit 11. Then the multiplexers in the units 15 and 16 are switched back again to memory unit 12 in order to read the net sector 6, etc., until finally sector 12 of memory unit 12 has been read and, so, all 9 sectors have been read.

In the manner described hereinabove, the system according to the invention is completely transparent and the central processing unit 11 is altogether unaware that in fact it communicates with two separate memory units, so that there is also no need for any adaptation of the software for the central processing unit 11, while there is obtained the advantage of a storage capacity that is twice as large as in the case of a single memory unit as well as a considerable acceleration of data transfer.

It is noted that the principle according to the invention can also be used without any problems when the memory units 12 and 13 each consist of two memory units connected in a master-slave configuration.

## Claims

1. A device for improving, in a computer system comprising at least one central processing unit (11) and one memory unit, the efficiency of data transfer between the memory unit and the central processing unit, the memory unit comprising an intermediate memory (cache memory) and at least one hard disk and the data transfer between the central processing unit and the hard disk occurring via the cache memory, characterized in that there are provided at least two memory units (12,13), each having a corresponding cache memory (4) and at least one hard disk (3), and that in the connecting path (6) between the central processing unit and the memory units, there are provided switching and decoding means (15, 16, 17) for transferring the data in blocks between the central processing unit (11) on the one hand and alternately the first or the second memory unit (12,13) on the other.

2. A device according to claim 1, characterized in that the switching means comprise a switching unit (16) for combining data blocks coming from the two memory units and intended for the central processing unit or for splitting the stream of data blocks coming from the central processing unit and intended for the two memory units; a second switching unit (15) for combining the interrupt signals generated by the two memory units and an address decoding unit (17) for converting the addresses generated by the central processing unit to addresses for the first and the second memory unit, respectively, which address decoding unit can generate control signals for controlling the first and second switching unit.

3. A device according to claim 1 or 2, in which the data on the hard disks are recorded in sectors, characterized in that each block of data comprises one sector.

4. A device according to claim 3, characterized in that the address decoding unit converts the addresses received to addresses for alternately a sector on the hard disk of the first memory unit and a sector on the hard disk of the second memory unit.

5. A personal computer of the AT type comprising a device according to claim 1, 2, 3, or 4.

FIG. 1a

FIG. 1b

FIG. 2a

FIG. 2b

European
Patent Office

EUROPEAN SEARCH
REPORT

Application Number

EP 91 20 1977

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | EP-A-0 156 724 (HONEYWELL BULL) <br> * page 2, line 21 - page 3, line 35 * * page 6, line 1 - page 7, line 20 * * page 9, line 10 - line 24 * * page 10, line 24 - page 11, line 24 * * page 16, line 22 - page 17, line 8 * * page 17, line 34 - page 18, line 4; figures 2,5,6 * <br> – – – | 1,2-5 | G 06 F 3/06 <br> G 06 F 12/08 |
| Y,A | EP-A-0 369 707 (ARRAY TECHNOLOGY) <br> * column 3, line 18 - line 28 * * column 4, line 11 - line 27 * * column 5, line 18 - line 43 * * column 8, line 18 - line 29 * * column 9, line 5 - line 19 * * column 12, line 13 - line 42 * * column 20, line 30 - column 21, line 44; figure 1 EP 91201977030 * <br> – – – | 1,2-4 | |
| A | WO-A-9 006 550 (CRAY RESEARCH) <br> * page 2, line 5 - line 22 * * page 3, line 17 - page 4, line 20 * <br> * page 11, line 4 - line 24 * * page 13, line 5 - page 14, line 4 * * page 19, line 7 - line 30; figures 1-4 * <br> – – – | 1-4 | |
| A | COMPUTER ARCHITECTURE NEWS vol. 17, no. 5, September 1989, pages 71 - 77; T.M. OLSON: 'Disk array performance in a random IO environment ' <br> * page 71, line 26 - page 72, line 8 * * page 74, line 74 - page 75, line 4 * <br> – – – | 1-5 | TECHNICAL FIELDS SEARCHED (Int. Cl.5) <br><br> G 06 F |
| A | DE-A-3 633 165 (TOSHIBA) <br> * the whole document * <br> – – – – – | 1-5 | |

The present search report has been drawn up for all claims

| Place of search | Date of completion of search | Examiner |
|---|---|---|
| The Hague | 23 September 91 | ADMINISTRATION |